# EUROPÄISCHE PATENTSCHRIFT

(11) **EP 1 377 887 B1**
(45) Veröffentlichungstag und Bekanntmachung des Hinweises auf die Patenterteilung: **31.05.2006**
(21) Anmeldenummer: 02737781.1
(22) Anmeldetag: 11.04.2002
(51) Int. Cl.: G05D 23/00, G01B 7/02

(54) **SCHALTUNGSANORDNUNG UND VERFAHREN ZUR TEMPERATURKOMPENSATION**
CIRCUIT AND METHOD FOR COMPENSATING FOR TEMPERATURE
CONFIGURATION DE CIRCUIT ET PROCEDE PERMETTANT D'OBTENIR UNE COMPENSATION THERMIQUE

(30) Priorität: 12.04.2001 DE 10118718; 22.03.2002 DE 10212999
(43) Veröffentlichungstag der Anmeldung: 07.01.2004
(73) Patentinhaber: Micro-Epsilon Messtechnik GmbH & Co. KG, 94496 Ortenburg (DE)
(72) Erfinder: HRUBES, Franz, 94094 Rotthalmünster (DE)
(74) Vertreter: Naumann, Ulrich
(86) Internationale Anmeldenummer: PCT/DE2002/001350
(87) Internationale Veröffentlichungsnummer: WO 2002/084424

(56) Entgegenhaltungen:
- EP-A- 0 049 304
- WO-A-00/70368
- US-A- 4 956 606
- US-A- 5 180 978

## Beschreibung

Die Erfindung betrifft eine Schaltungsanordnung zur Temperaturkompensation mit einem nach dem Wirbelstromprinzip arbeitenden, Sensor zum Messen physikalischer Größen und mit einer Auswerteeinheit zur Auswertung des Messsignals des Sensors, wobei der Sensor und die Auswerteeinheit über ein Verbindungskabel miteinander verbunden sind und wobei eine zusätzliche Leitung Kompensationsleitung - zur Kompensation der Temperatur des Verbindungskabels dient.

Schaltungsanordnungen zur Temperaturkompensation sind in der Praxis seit langem bekannt. Bei Schaltungsanordnungen, die nach dem Wirbelstromprinzip arbeiten, wird die Impedanzänderung der Messspule eines Sensors gemessen, die sich durch die Annäherung eines elektrisch leitfähigen Messobjekts ergibt. Die Impedanzänderung wird dann so ausgewertet, dass sich ein Messsignal ergibt, das beispielsweise den Abstand zwischen dem Sensor und dem Messobjekt in einem möglichst linearen Zusammenhang wiedergibt. Da sich die Impedanz der zur Messung verwendeten Messspule sowie die elektrische und magnetische Leitfähigkeit des Messobjekts und somit die Rückwirkung des Messobjekts auf den Sensor jedoch auch mit der Temperatur ändern, ist eine entsprechende Temperaturkompensation zur Erlangung eines korrekten Messsignals erforderlich. Gleichzeitig ist zu berücksichtigen, dass der Temperatureinfluss unterschiedliche Kompensationswerte in Abhängigkeit vom Messabstand erfordert.

Eine Möglichkeit dies zu erreichen ist beispielsweise, die Temperatur des Sensors zu messen. Daraufhin kann dann das Temperaturmesssignal dazu benutzt werden, entsprechende Korrekturwerte aus einer abgelegten Tabelle auszulesen oder ggf. zu interpolieren und damit das Messsignal zu korrigieren. Alternativ hierzu kann das Temperaturmesssignal direkt mit dem Messsignal verrechnet werden, z.B. durch einfache oder mehrfache Addition und/oder durch die Multiplikation von Korrekturfaktoren mit den Messsignalen. Dies kann vor und/oder nach einer Linearisierung des Messsignals erfolgen, evtl. sogar durch eine zusätzliche nichtlineare Veränderung des Temperaturmesssignals vor der Korrekturstufe. Auf diese Art und Weise lässt sich eine einfache Temperaturkompensation erreichen.

Häufig ist es nun erforderlich, z.B. aus Platzgründen oder aus Gründen der Umgebungsbedingungen, den Sensor entfernt von der Auswerteeinheit anzuordnen. Oftmals ist auch direkt am Sensor kein Platz, um eine elektronische Vorverarbeitung des Messsignals zu erreichen. Deshalb muss der Sensor über ein Verbindungskabel mit der Auswerteeinheit verbunden werden. Dieses Verbindungskabel stellt jedoch bei der Messung eine zusätzliche Impedanz dar, die selbst wiederum temperaturabhängig ist und somit auch temperaturabhängige Messfehler erzeugt. In vielen Fällen ist die Temperatur des Sensors auch nicht mit der: Temperatur des Verbindungskabels identisch, so dass eine Temperaturkompensation, die nur aus der Temperatur des Sensors abgeleitet wird, den durch das Verbindungskabel hervorgerufenen Messfehler nicht mitkompensiert.

Aus der EP 0 049 304 B1 ist eine Schaltungsanordnung und ein Verfahren zur Temperaturkompensation mit einem nach dem Wirbelstromprinzip arbeitenden Sensor zum Messen physikalischer Größen und mit einer Auswerteeinheit zur Auswertung des Messsignals des Sensors bekannt. Der eine Messspule aufweisende Sensor und die Auswerteeinheit sind über ein Verbindungskabel miteinander verbunden. Bei geeigneter Abstimmung der Impedanzen der Messspule, des Messobjekts und des Verbindungskabels ergibt sich ein Temperaturverhalten, das mit dem dort offenbarten Verfahren auch den Einfluss des Verbindungskabels hinreichend mitkompensiert. Diese Abstimmung und Übereinstimmung der Impedanzen ist jedoch nur in Sonderfällen zu realisieren. Da der Sensor normalerweise gegen unterschiedliche Messobjekte mit entsprechend unterschiedlichen temperaturabhängigen Impedanzänderungen eingesetzt wird und da die möglichen Abmessungen der Messspule sowie des benutzten Drahtdurchmessers zur Angleichung der Impedanz der Messspule und des Verbindungskabels einsatzbedingt oft enge Grenzen gesetzt sind, treten auch bei der in der EP 0 049 304 B1 offenbarten Schaltungsanordnung und bei dem dort offenbarten Verfahren größere Messfehler aufgrund der unterschiedlichen Temperaturen des Sensors und des Verbindungskabels auf.

Aus der WO-A-00 70 368 ist eine Schaltungsanordnung zur Temperaturkompensation mit einem Sensor zum Messen des Abstands zwischen dem Sensor und dem Messobjekt bekannt. Die Schaltungsanordnung umfasst eine Auswerteeinheit zur Auswertung des Messsignals des Sensors. Der Sensor und die Auswerteeinheit sind über ein Verbindungskabel miteinander verbunden. Gleichstromleitwert und Wechselstromleitwert des Sensors werden gemessen. Der Sensor arbeitet demzufolge nach dem Wirbelstromprinzip. Die Auswerteeinheit erzeugt ein Ausgangssignal, das unabhängig von der Temperatur und unabhängig von der Verbindungskabellänge ist. Drei Kabel verbinden den Sensor mit der Auswerteeinheit. Die drei Werte - Gleichstromleitwert, Wechselstromleitwert und Suszeptanz - die der Auswerteeinheit mittels dieser drei Kabel übertragen werden, dienen zur Erzeugung eines temperaturkompensierten Abstandsmesswerts. In der Temperaturkompensation ist auch die Kompensation der Temperatur des Verbindungskabels inbegriffen. Entsprechend handelt es sich bei einem der drei Kabel um ein zusätzliches Kabel zur Kompensation der Temperatur des Verbindungskabels.

Die aus der WO-A-00 70 368 bekannte Schaltungsanordnung vermag zwar zur Kompensation der Temperatur des Kabels geeignet sein, ist jedoch aufgrund der Kabelführung und Kabelanordnung umständlich und daher aufwendig.

Der vorliegenden Erfindung liegt daher die Aufgabe zugrunde, eine Schaltungsanordnung der voranstehend genannten Art derart auszugestalten und weiterzubilden, dass mit einfachen Mitteln und bei einfacher Konstruktion eine Kompensation der Temperatur des Verbindungskabels möglich ist.

Erfindungsgemäß wird die voranstehende Aufgabe durch die Merkmale des Patentanspruchs 1 gelöst. Danach ist die hier in Rede stehende Schaltungsanordnung zur Temperaturkompensation dadurch gekennzeichnet, dass das Verbindungskabel als Koaxialkabel ausgeführt ist und dass die Kompensationsleitung an einem Ende mit dem Schirm des Koaxialkabels verbunden ist, wobei das Koaxialkabel als Rückleitung der Kompensationsleitung zur Auswerteeinheit dient oder wobei die Kompensationsleitung eine separate Rückleitung aufweist.

In erfindungsgemäßer Weise ist erkannt worden, dass der temperaturbedingte und durch das Verbindungskabel hervorgerufene Messfehler nicht allein durch Angleichung der Impedanzen der Messspule, des Messobjekts und des Verbindungskabels erreicht werden kann. Vielmehr muss die Temperatur des Verbindungskabels separat erfasst werden, um zuverlässig kompensiert werden zu können. Hierzu wird der Ohm'sche Widerstand der zusätzlich angeordneten Kompensationsleitung verwendet, der sich mit der Temperatur ändert. Die Temperatur kann so erfindungsgemäß entlang des Verbindungskabels als Mittelwert über die gesamte Länge des Verbindungskabels erfasst werden und daraus ein Korrektursignal für den Messwert abgeleitet und eine entsprechende Korrektur durchgeführt werden. Ein weiterer Vorteil der erfindungsgemäßen Schaltungsanordnung ist darin zu sehen, dass bei der mechanischen Realisierung des Sensors, insbesondere im Hinblick auf die Abmessungen und die Impedanz der Messspule, größere Freiheiten als bisher möglich sind, da nunmehr keine Abstimmung zwischen den Impedanzen der Messspule, des Messobjekts und des Verbindungskabels mehr nötig sind.

Das Verbindungskabel ist als Koaxialkabel ausgeführt. Dies ist besonders im Hinblick auf eine gute Leitfähigkeit des Verbindungskabels bei hohen Frequenzen von Vorteil.

Zur einfachen Ausgestaltung ist die Kompensationsleitung an einem Ende mit dem Schirm des Koaxialkabels verbunden. Im Allgemeinen weist der Schirm eines Koaxialkabels hierbei einen niederohmigen Widerstand auf. Des Weiteren ist die Kompensationsleitung an dem sensorseitigen Ende mit dem Koaxialkabel verbunden. Das Koaxialkabel ist dabei als Rückleitung der Kompensationsleitung zur Auswerteeinheit ausgeführt. Alternativ dazu kann die Kompensationsleitung eine separate Rückleitung aufweisen. Hierdurch ist die Kompensationsleitung bei Beschädigung besonders einfach austauschbar. Die Rückleitung könnte hierbei parallel zum Verbindungskabel zurück zur Auswerteeinheit geführt sein. Es wäre dann eine zusätzlichen Verbindung zwischen Auswerteeinheit und Kompensationskabel erforderlich.

Im Rahmen einer besonders platzsparenden Ausgestaltung könnte die Kopmensationsleitung integraler Bestandteil des Verbindungskabels sein. Hierdurch wäre die Kompensationsleitung auch gut vor äußeren mechanischen Einflüssen geschützt.

Dies wäre besonders gut dann realisierbar, wenn die Kompensationsleitung als Draht ausgeführt wäre, der besonders einfach in das Verbindungskabel integrierbar wäre.

Hinsichtlich einer besonders genauen Kompensation der Temperatur könnte die Kompensationsleitung gegenüber dem Verbindungskabel abgeschirmt sein. Hierdurch könnte der Einfluss der Kompensationsleitung auf die Impedanz der Verbindungsleitung und somit des Messkreises deutlich vermindert bzw. weitestgehend verhindert werden.

Alternativ oder zusätzlich könnte die Kompensationsleitung auch parallel zu dem Verbindungskabel angeordnet sein. Hierdurch könnte eine Beeinflussung der Impedanz des Verbindungskabels besonders einfach verhindert werden, ohne dass die Kompensationsleitung besonders abgeschirmt werden müsste.

In weiter vorteilhafter Weise könnte die Kompensationsleitung von einer Signalquelle, vorzugsweise mit Gleichstrom, speisbar sein, wodurch ein temperaturabhängiges Kompensationsleitungssignal, insbesondere ein temperaturabhängiges Gleichspannungssignal erzeugbar wäre. Das temperaturabhängige Kompensationsleitungssignal würde demnach am Widerstand der Kompensationsleitung abfallen.

Zusätzlich oder alternativ könnte die Kompensationsleitung von einer Signalquelle mit niederfrequentem Wechselstrom speisbar sein, wodurch ein temperaturabhängiges Kompensationsleitungssignal, insbesondere ein niederfrequentes Wechselspannungssignal, erzeugbar wäre. Mit Hilfe des Gleichstroms oder des niederfrequenten Wechselstroms, der durch die Kompensationsleitung fließt, könnte also der Widerstand der Kompensationsleitung gemessen werden. Daraus abgeleitet könnte dann die mittlere Temperatur des Verbindungskabels gemessen werden, da sich der Widerstand der Kompensationsleitung weitgehend linear mit der Temperatur ändert.

Hinsichtlich einer besonders einfachen Temperaturkompensation könnte eine vorzugsweise analoge Schaltung zur Aufbereitung des temperaturabhängigen Kompensationssignals, insbesondere des temperaturabhängigen Gleichspannungssignals und/oder des niederfrequenten Wechselspannungssignals, und/oder zur Erzeugung eines Kompensationssignals angeordnet sein. Die Schaltung könnte dabei das Kompensationssignal derart aufbereiten, dass die so entstandenen temperaturabhängigen Gleichspannungs- bzw. Wechselspannungssignale zur separaten Korrektur des Temperatureinflusses auf das Verbindungskabel genutzt werden können.

In weiter vorteilhafter Weise könnten zur Weiterverarbeitung des von der Schaltung erzeugten Kompensationssignals Bauelemente zur Korrektur des temperaturabhängigen Kompensationssignals, insbesondere zur Multiplikation des temperaturabhängigen Kompensationssignals mit mindestens einem Korrekturfaktur, angeordnet sein. Die Bauelemente zur Korrektur könnten dazu dienen, dass die Kompensation für den gesamten Messbereich gültig ist. Die Korrekturfaktoren könnten hierbei an den Temperaturgang des Sensors, insbesondere der Messspule des Sensors angepasst sein, um eine besonders gute Temperaturkompensation zu erreichen.

In besonders einfacher Weise könnte ein Generator zur Erzeugung eines hochfrequenten Wechselstromsignals, mit dem die Messspule speisbar ist, angeordnet sein, um ein Messsignal, insbesondere ein hochfrequentes Wechselspannungsmesssignal zu erzeugen. Somit wäre ein hochfrequentes Wechselspannungsmesssignal erzeugbar, das sowohl von der Temperatur als auch von der physikalischen Größe, beispielsweise dem Abstand des Sensors zu einem Messobjekt, abhängt.

Im Hinblick auf eine besonders gute Temperaturkompensation könnte ein weiterer Generator zur Erzeugung eines Gleichstromsignals und/oder eines niederfrequenten Wechselstromsignals, mit dem die Messspule speisbar ist, angeordnet sein. Dieses Gleichstrom- und/oder Wechselstromsignal könnte dem hochfrequenten Wechselstromsignal, das zur Erzeugung des von der physikalischen Größe abhängigen Messsignals dient, überlagerbar sein. Das dem hochfrequenten Wechselstromsignal überlagerte Gleichstrom- bzw. niederfrequente Wechselstromsignal erzeugt am Ohm'schen Widerstand der Messspule und des Verbindungskabels ein Gleich- bzw. niederfrequentes Wechselspannungssignal, das sich weitgehend linear mit der Temperatur der Messspule und des Verbindungskabels ändert.

Im Rahmen einer abermals sehr guten Temperaturkompensation könnte eine vorzugsweise analoge Schaltung zur Trennung und Verarbeitung des hochfrequenten Messsignals und des überlagerten Gleichspannungssignals und/oder des niederfrequenten Wechselspannungssignals zur Erzeugung eines temperaturabhängigen Kompensationsmesssignals, insbesondere eines temperaturabhängigen Gleichspannungsmesssignals, angeordnet sein. Mittels dieses temperaturabhängigen Gleichspannungsmesssignals wäre dann die Temperatur des Sensors bzw. der Messspule und unter Umständen im eingeschränkten Maße des Verbindungskabels kompensierbar.

Hinsichtlich einer abermals sehr einfachen Ausgestaltung könnte ein Bauteil zur Bildung eines Differenzsignals des temperaturabhängigen Kompensationsmesssignals und des korrigierten temperaturabhängigen Kompensationssignals angeordnet sein. Hierdurch könnte das so entstehende Signal, das vorzugsweise ein Gleichspannungssignal ist, nur noch von der Temperatur der Messspule abhängig sein. Dieses Bauteil könnte in besonders einfacher Weise ein Komparator sein.

Im Rahmen einer abermals sehr guten Temperaturkompensation könnten Bauelemente zur Korrektur des Differenzsignals und zur Korrektur des temperaturabhängigen Kompensationssignals, insbesondere zur Multiplikation des Differenzsignals und/oder des temperaturabhängigen Kompensationssignals mit Korrekturfaktoren, angeordnet sein. Die erforderlichen Korrekturfaktoren könnten dabei an den Temperaturgang der Messspule und/oder des Messobjekts angepasst sein.

In besonders vorteilhafter Weise könnte ein Bauelement zur Demodulation des hochfrequenten Messsignals angeordnet sein, um ein von der physikalischen Größe abhängiges Gleichspannungsmesssignal zu erzeugen. Das Gleichspannungsmesssignal ist hierbei von der physikalischen Größe sowie der Temperatur abhängig und ließe sich besonders einfach weiterverarbeiten, insbesondere ließe sich besonders einfach die Temperatur kompensieren. Bei dem Bauelement zur Demodulation könnte es sich in besonders einfacher Weise um einen Demodulator handeln.

In weiter vorteilhafter Weise könnte ein Bauelement zur Bildung des Summensignals des der physikalischen Größe abhängigen Gleichspannungssignals und/oder des korrigierten Differenzsignals und/oder des korrigierten temperaturabhängigen Kompensationssignals angeordnet sein. Die erforderlichen Korrekturfaktoren sind hierbei an den Temperaturgang der Messspule und des Messobjekts anzupassen.

Zur Linearisierung der Signale könnte eine Linearisierungsschaltung zur Linearisierung des Summensignals angeordnet sein. Dies würde in besonders einfacher Weise die Verarbeitung von nichtlinearen Signalen ermöglichen.

Im Rahmen einer abermals sehr guten Temperaturkompensation könnten Bauelemente zur Korrektur des Differenzsignals und zur Korrektur des temperaturabhängigen Kompensationssignals, insbesondere zur Multiplikation des Differenzsignals und/oder des Kompensationssignals mit Korrekturfaktoren, angeordnet sein. Auch hier könnten die Korrekturfaktoren an den Temperaturgang der Messspule und des Messobjekts angepasst werden, um eine besonders gute Temperaturkompensation gewährleisten zu können.

Ferner könnte ein Bauelement zur Bildung eines weiteren Summensignals des linearisierten Summensignals und/oder des korrigierten Differenzsignals und/oder des korrigierten temperaturabhängigen Kompensationssignals angeordnet sein. Hierdurch würde dann die eigentliche Temperaturkompensation des Messsignals stattfinden. Am Ausgang des Summierers würde sodann das temperaturkompensierte und lediglich von der physikalischen Größe abhängige Messsignal anliegen, das dann in besonders einfacher Weise weiterverarbeitet werden könnte. Dabei sind die Korrekturfaktoren vor und nach der Linearisierung derart berechnet, dass die Kompensation für den gesamten Messbereich der physikalischen Größe gilt.

Zur Abgleichung der Schaltungsanordnung auf eine bestimmte Resonanzfrequenz könnte eine Ergänzungskapazität zur Abstimmung der Resonanzfrequenz des durch die Messspule und/oder die Kapazität und/oder die Induktivität des Verbindungskabels und/oder die Ergänzungskapazität gebildeten Schwingkreises angeordnet sein. Die Größe der Ergänzungskapazität könnte dabei in üblicher Weise bestimmt werden. An diesem Schwingkreis würde in bereits beschriebener Weise dann das hochfrequente Wechselstromsignal, dass das Messsignal erzeugt, anliegen.

Hinsichtlich einer besonders guten Temperaturkompensation könnte zudem ein Temperatursensor in unmittelbarer Nähe der Messspule zur Erfassung der Temperatur des Sensors angeordnet sein. Dies könnte zusätzlich oder alternativ zu der Überlagerung des hochfrequenten Wechselstromsignals mit einem Gleichstromsignal und/oder einem niederfrequenten Wechselstromsignal erfolgen.

In besonders vorteilhafter Weise könnte der Temperatursensor mit der Messspule thermisch gekoppelt sein. Im Rahmen einer besonders einfachen Ausgestaltung könnte hierbei der Temperatursensor in den Sensor integriert sein.

Im Rahmen einer wiederum sehr einfachen Ausgestaltung könnte ein Generator zur Erzeugung eines Temperatursensorsignals angeordnet sein. Hierbei könnte es sich insbesondere bei dem Temperatursensorsignal um ein Gleichspannungs- und/oder ein niederfrequentes Wechselspannungssignal handeln.

Hinsichtlich einer besonders einfachen Weiterverarbeitung könnte eine analoge Schaltung zur Aufbereitung und Erzeugung eines temperaturabhängigen Temperatursensormesssignals angeordnet sein. Die Verarbeitung des Temperatursensormesssignals könnte sodann analog zu der Verarbeitung des von der Temperatur der Messspule und der Verbindungsleitung abhängigen Gleichspannungs- bzw. niederfrequenten Wechselspannungssignals - wie bereits obig beschrieben - erfolgen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 und dem nebengeordneten Patentanspruch 30 nachgeordneten Patentansprüche und andererseits auf die nachfolgende Erläuterung bevorzugter Ausführungsbeispiele einer erfindungsgemäßen Schaltungsanordnung und eines erfindungsgemäßen Verfahrens zur Temperaturkompensation anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigt
- Fig.1: in einer schematischen Darstellung, eine bekannte Schaltungsanordnung zur Temperaturkompensation,
- Fig. 2: in einer schematischen Darstellung, ein Ausführungsbeispiel einer erfindungsgemäßen Schaltungsanordnung zur Temperaturkompensation und
- Fig. 3: in einer schematischen Darstellung, ein weiteres Ausführungsbeispiel einer erfindungsgemäßen Schaltungsanordnung.

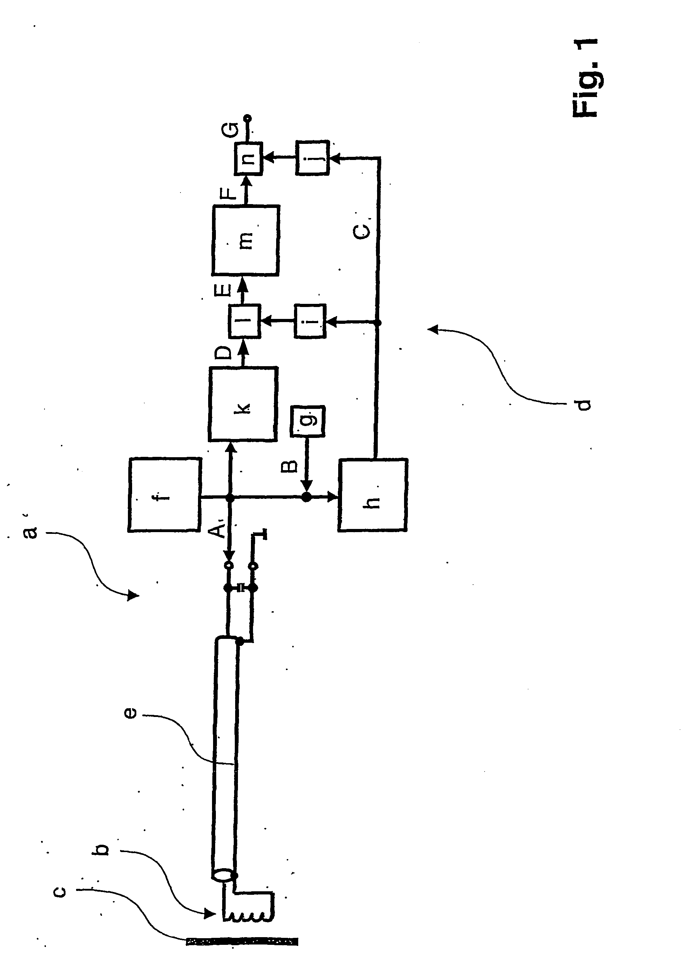

Fig. 1 zeigt in einer schematischen Darstellung eine bekannte Schaltungsanordnung a zur Temperaturkompensation. Die Schaltungsanordnung a umfasst einen nach dem Wirbelstromprinzip arbeitenden, eine Messspule aufweisenden Sensor b zum Messen des Abstands des Sensors b zu einem Messobjekt c. Eine Auswerteeinheit d zur Auswertung des Messsignals des Sensors b ist mit dem Sensor b über ein Verbindungsleitung e verbunden.

Ein Generator f dient zur Erzeugung eines hochfrequenten Wechselstromsignals A mit dem die Messspule des Sensors b gespeist wird. Ein weiterer Generator g erzeugt ein Gleichstromsignal B, das dem vom Generator f erzeugten hochfrequenten Wechselstromsignal A überlagert wird.

Während das durch das hochfrequente Wechselstromsignal A erzeugte hochfrequente Messsignal, das demnach ein hochfrequentes Wechselspannungssignal ist, zur Messung des Abstands des Sensors b gegenüber dem Messobjekt c dient, dient das Gleichstromsignal B zum Erzeugen einer Gleichspannung am Widerstand der Verbindungsleitung e sowie der Messspule des Sensors b. Dies bedeutet, dass das Gleichspannungssignal B lediglich von der Temperatur des Sensors b und der Verbindungsleitung e abhängt. Zur Trennung und Verarbeitung des hochfrequenten Wechselspannungssignals A und des überlagerten Gleichspannungssignals B ist eine analoge Schaltung h vorgesehen.

Das von der Schaltung h erzeugte Kompensationssignal C wird mittels zweier Bauelemente i und j zur Korrektur des temperaturabhängigen Kompensationssignals C mit jeweils einem Korrekturfaktor Ka und Kb multipliziert.

Zur Demodulation des hochfrequenten Messsignals A ist ein Bauelement k angeordnet, um ein abstandsabhängiges Gleichspannungsmesssignal D zu erzeugen. Zur Bildung eines Summensignals E ist ein Bauelement I angeordnet. Das Summensignal E umfasst hierbei das abstandsabhängige Gleichspannungsmesssignal D sowie das mit dem Korrekturfaktor Ka korrigierte Kompensationssignal C. Zur Linearisierung des Summensignals E ist eine Linearisierungsschaltung m angeordnet. Am Ausgang der Linearisierungsschaltung m liegt nunmehr das linearisierte Summensignal F an.

Zur Erlangung eines temperaturkompensierten Messsignals G ist ein weiteres Bauelement n zur Bildung eines weiteren Summensignals vorgesehen, das dem temperaturkompensierten Messsignal G entspricht. Das Summensignal G umfasst hierbei das linearisierte Summensignal F sowie das mit dem Korrekturfaktor Kb korrigierte Kompensationssignal C.

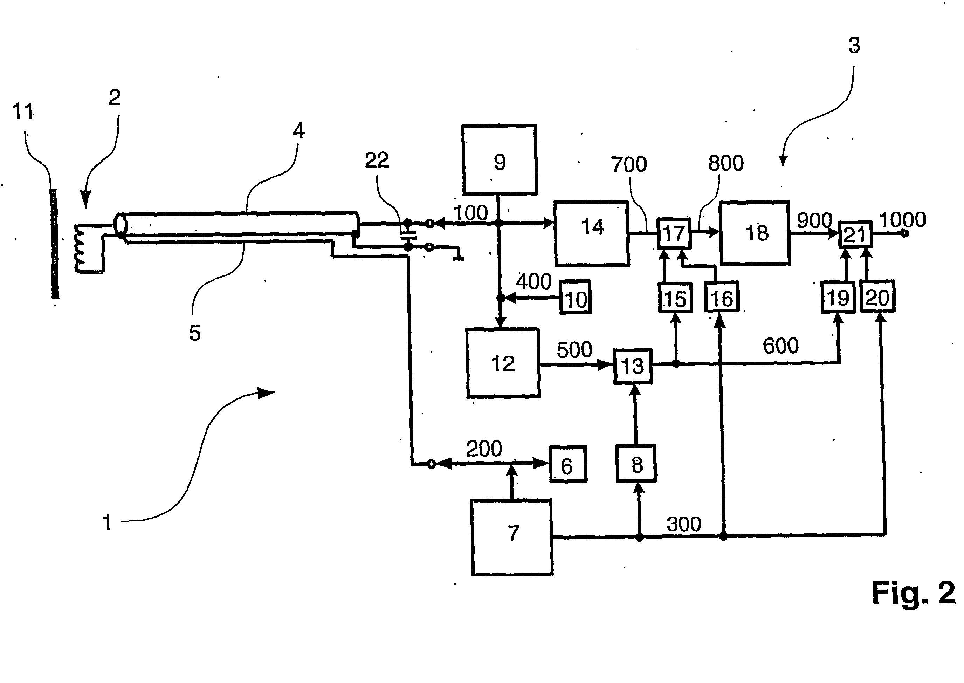

Die in Fig. 2 gezeigte erfindungsgemäße Schaltungsanordnung 1 zur Temperaturkompensation weist einen nach dem Wirbelstromprinzip arbeitenden, eine Messspule aufweisenden Sensor 2 zum Messen physikalischer Größen und eine Auswerteeinheit 3 zur Auswertung des Messsignals des Sensors 2 auf, wobei der Sensor 2 und die Auswerteeinheit 3 über ein Verbindungskabel 4 miteinander verbunden sind.

Erfindungsgemäß weist die Schaltungsanordnung 1 eine zusätzliche Leitung 5 - die Kompensationsleitung 5 - zur Kompensation der Temperatur des Verbindungskabels 4 auf. Die Kompensationsleitung 5 ist in diesem Ausführungsbeispiel als Draht ausgebildet und das Verbindungskabel 4 ist als Koaxialkabel ausgeführt. Die Kompensationsleitung 5 ist hierbei parallel zu dem Verbindungskabel 4 angeordnet und am sensorseitigen Ende des Koaxialkabels mit dem Schirm des Koaxialkabels verbunden. Das Koaxialkabel dient somit als niederohmige Rückleitung der Kompensationsleitung 5 zur Auswerteeinheit 3.

Die Kompensationsleitung 5 wird von einer Stromquelle 6 mit Gleichstrom gespeist, wodurch ein temperaturabhängiges Kompensationsleitungssignal 200, das demnach ein temperaturabhängiges Gleichspannungssignal ist, erzeugt wird. Zur Aufbereitung des temperaturabhängigen Kompensationsleitungssignals 200 ist eine analoge Schaltung 7 angeordnet. Die Schaltung 7 erzeugt ein Kompensationssignal 300, das in diesem Ausführungsbeispiel eine Gleichspannung ist und das lediglich von der Temperatur des Drahts und dementsprechend der Temperatur der Kompensationsleitung 5 abhängig ist. Das von der Schaltung erzeugte Kompensationssignal 300 wird mittels eines Bauelements 8 zur Korrektur des temperaturabhängigen Kompensationssignals 300 mit einem Korrekturfaktor K1 multipliziert.

Ein Generator 9 dient zur Erzeugung eines Messsignals, insbesondere eines hochfrequenten Wechselstromsignals 100, mit dem die Messspule des Sensors 2 gespeist wird. Ein weiterer Generator 10 erzeugt ein Gleichstromsignal 400, das dem vom Generator 9 erzeugten hochfrequenten Wechselspannungssignal 100 überlagert wird.

Während das hochfrequente Wechselstromsignal 400 zur Messung der physikalischen Größe, in diesem Ausführungsbeispiel des Abstands gegenüber einem Messobjekt 11 dient, dient das Gleichstromsignal 400 zum Erzeugen einer Gleichspannung am Widerstand der Verbindungsleitung 4 sowie der Messspule des Sensors 2. Dies bedeutet, dass das Gleichspannungssignal lediglich von der Temperatur des Sensors 2 und der Verbindungsleitung 4 abhängt. Zur Trennung und Verarbeitung des hochfrequenten Wechselspannungssignals 100 und des überlagerten Gleichspannungssignals 400 ist eine analoge Schaltung 12 vorgesehen.

Das von der analogen Schaltung 12 erzeugte Kompensationsmesssignal 500 sowie das mit dem Korrekturfaktor K1 korrigierte temperaturabhängige Kompensationssignal 300 werden mittels eines Bauteils 13 voneinander subtrahiert. Das entstehende Differenzsignal 600 ist somit lediglich von der Temperatur der Messspule des Sensors 2 abhängig.

Zur Demodulation des hochfrequenten Messsignals ist ein Bauelement 14 angeordnet, der in diesem Ausführungsbeispiel als Demodulator ausgestaltet ist, um ein abstandsabhängiges Gleichspannungsmesssignal 700 zu erzeugen. Dieses Gleichspannungsmesssignal 700 ist hierbei nicht temperaturkompensiert.

Zur Korrektur des Differenzsignals 600 sowie zur Korrektur des temperaturabhängigen Kompensationssignals 300 sind Bauelemente 15, 16 vorgesehen, die das Differenzsignal 600 mit einem Korrekturfaktor K2 und das Kompensationssignal 300 mit dem Korrekturfaktor K3 multiplizieren.

Zur Bildung eines Summensignals 800 ist ein Bauelement 17 angeordnet. Das Summensignal 800 umfasst hierbei das abstandsabhängige Gleichspannungsmesssignal 700 sowie das mit dem Korrekturfaktor K2 korrigierte Differenzsignal 600 und das mit dem Korrekturfaktor K3 korrigierte temperaturabhängige Kompensationssignal 600. Zur Linearisierung des Summensignals 800 ist eine Linearisierungsschaltung 18 angeordnet. Am Ausgang der Linearisierungsschaltung 18 liegt nunmehr das linearisierte Summensignal 900 an.

Ferner sind Bauelemente 19, 20 zur Korrektur des Differenzsignals 600 und zur Korrektur des temperaturabhängigen Kompensationssignals 300 angeordnet. Das Bauelemente 19 multipliziert das Differenzsignal 600 mit einem Korrekturfaktor K4 und das Bauelement 20 multipliziert das Kompensationssignal 300 mit dem Korrekturfaktor K5.

Zur Erlangung eines temperaturunabhängigen Messsignals 1000 ist ein weiteres Bauelement 21 zur Bildung eines weiteren Summensignals, das dem temperaturkompensierten Messsignal 1000 entspricht, vorgesehen. Das Summensignal 1000 umfasst hierbei das linearisierte Summensignal 900 sowie das mit dem Korrekturfaktor K4 korrigierte Differenzsignal 600 und das mit dem Korrekturfaktor K5 korrigierte temperaturabhängige Kompensationssignal 300.

Es ist ferner eine Ergänzungskapazität 22 zur Abstimmung der Resonanzfrequenz des durch die Messspule des Sensors sowie die Kapazität und die Induktivität des Verbindungskabels 4 und die Ergänzungskapazität 22 gebildeten Schwingkreises angeordnet.

Vor der ersten Inbetriebnahme des Sensors 2 erfolgt eine Kalibrierung in Abhängigkeit von der Temperatur des Sensors 2 gemeinsam mit dem Messobjekt 11 und separat in Abhängigkeit von der Temperatur des Verbindungskabels 4. Die dabei gemessenen Temperaturspannungen und Messsignale werden dabei derart miteinander verrechnet, dass die Korrekturfaktoren K1 bis K5 für die Temperaturkompensation, d.h. die Additionswerte die vor und nach der Linearisierung des Messsignals eingreifen, dieses unabhängig vom Messabstand gleich gut kompensieren.

Es wird dabei zusätzlich eine temperaturabhängige Tabelle der Korrekturwerte K1 bis K5 angelegt, so dass bei der eigentlichen Messung des Abstands jeweils in Abhängigkeit von den gemessenen Temperaturwerten mit Hilfe eines hier nicht dargestellten Rechners die entsprechenden Werte abgefragt werden und das Messsignal entsprechend durch Addition vor und nach der Linearisierung korrigiert wird, wobei bei Zwischenwerten eine Iteration der entsprechenden Tabellenwerte durchgeführt wird.

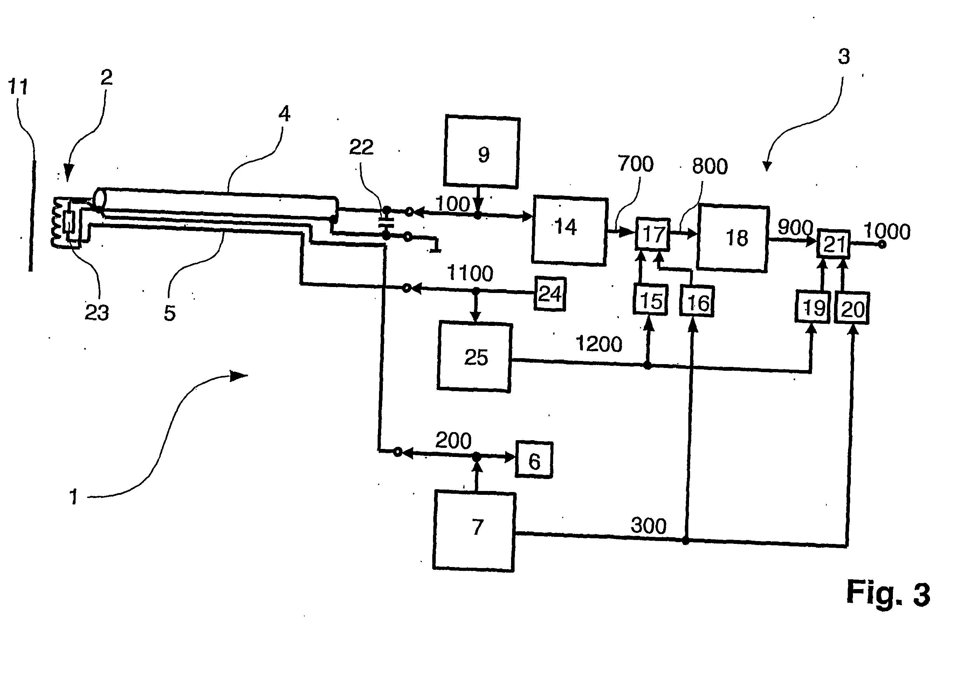

In Fig. 3 ist ein weiteres Ausführungsbeispiel einer erfindungsgemäßen Schaltungsanordnung gezeigt. Hierbei ist ein Temperatursensor 23 in unmittelbarer Nähe der Messspule zur Erfassung der Temperatur des Sensors 2 angeordnet und zwar in der Art, dass der Temperatursensor 23 der Messspule des Sensors 2 thermisch gekoppelt ist.

Zur Erzeugung eines Temperatursensorsignals 1100 ist ein Generator 24 vorgesehen. Der Temperatursensor 23 ist hierbei anstatt des überlagerten Gleichstromsignals 400 des in Fig. 2 gezeigten Ausführungsbeispiels zur Kompensation der Temperatur des Sensors 2 vorgesehen. Das gemessene Temperatursensorsignal 1100 kann entsprechend dem Gleichspannungssignal 400 mittels einer analogen Schaltung 25 kompensiert werden. Die Schaltung 25 dient zur Aufbereitung des Temperatursensorsignal 1100, so dass wieder ein von der Temperatur der Messspule des Sensors 2 abhängiges Temperatursensormesssignal 1200 erzeugt wird, das dem temperaturabhängigen Kompensationsmesssignal 500 des Ausführungsbeispiels der Fig. 2 entspricht. Die Kompensation der Temperatur erfolgt nun analog zu der Kompensation im Ausführungsbeispiel der Fig. 2. Zur Vermeidung von Wiederholungen auf die obigen Ausführungen zum Ausführungsbeispiel der Fig. 2 verwiesen. Lediglich die Differenzbildung zwischen dem Gleichspannungssignal 400 und dem korrigierten Kompensationssignal 300 ist hierbei nicht nötig, da das Temperatursensormesssignal 1200 bereits lediglich von der Temperatur der Messspule des Sensors 2 abhängt.

Hinsichtlich weiterer Details wird zur Vermeidung von Wiederholungen auf den allgemeinen Teil der Beschreibung sowie auf die beigefügten Patentansprüche verwiesen.

## Patentansprüche

1. Schaltungsanordnung (1) zur Temperaturkompensation mit einem nach dem Wirbelstromprinzip arbeitenden Sensor zum Messen physikalischer Größen und mit einer Auswerteeinheit (3) zur Auswertung des Messsignals (100) des Sensors (2), wobei der Sensor (2) und die Auswerteeinheit (3) über ein Verbindungskabel (4) miteinander verbunden sind und wobei eine zusätzliche Leitung- Kompensationsteitung (5) - zur Kompensation der Temperatur des Verbindungskabels (4) dient, **dadurch gekennzeichneit, dass** das Verbindungskabel (4) als Koaxialkabel ausgeführt ist und dass die Kompensationsleitung (5) an einem Ende mit dem Schirm des Koaxialkabels verbunden ist, wobei das Koaxialkabel als Rückleitung der Kompensationsleitung (5) zur Auswerteeinheit (3) dient, oder wobei die Kompensationsleitung (5) eine separate Rückleitung aufweist.

2. Schaltungsanordnung nach Anspruch 1, **dadurch gekennzeichnet, dass** die Kompensationsleitung (5) integraler Bestandteil des Verbindungskabels (4) ist oder parallel zu dem Verbindungskabel (4) angeordnet ist, wobei die Kompensationsleitung (5) gegenüber dem Verbindungskabel (4) abgeschirmt sein kann.

3. Schaltungsanordnung nach Anspruch 1 oder 2, **dadurch gekennzeichnet, dass** die Kompensationsleitung (5) von einer Signalquelle (6) speisbar ist, wodurch ein temperaturabhängiges Kompensationsleitungssignal (200) insbesondere ein temperaturabhängiges Gleichspannungssignal, erzeugbar ist oder dass die Kompensationsleitung (5) von einer Signalquelle (6) mit niederfrequentem Wechselstrom speisbar ist, wodurch ein temperaturabhängiges Kompensationsleitungssignal (200) erzeugbar ist, wobei eine vorzugsweise analoge Schaltung (7) zur Aufbereitung des temperaturabhängigen Kompensationsleitungssignals (200), insbesondere des temperaturabhängigen Gleichspannungssignals und/oder des niederfrequenten Wechselspannungssignals, und/oder zur Erzeugung eines Kompensationssignals (300) angeordnet sein kann und wobei zur Weiterverarbeitung des von der Schaltung (7) erzeugten Kompensationssignals (300) Bauelemente (8) zur Korrektur des temperaturabhängigen Kompensationssignals (300), insbesondere zur Multiplikation des temperaturabhängigen Kompensationssignals (300) mit mindestens einem Korrekturfaktor (K1), angeordnet sein können.

4. Schaltungsanordnung nach einem der Ansprüche 1 bis 3, **dadurch gekennzeichnet, dass** ein Generator (9) zur Erzeugung eines Signals, insbesondere eines hochfrequenten Wechselstromsignals (100), mit dem die Messspule speisbar ist, angeordnet ist, um ein Messsignal, insbesondere ein hochfrequentes Wechselspannungsmesssignal (100) zu erzeugen und/oder dass ein weiterer Generator (10) zur Erzeugung eines Gleichstromsignals (400) und/oder eines niederfrequenten Wechselstromsignals, mit dem die Messspule speisbar ist, angeordnet ist, wobei eine vorzugsweise analoge Schaltung (12) zur Trennung und Verarbeitung des hochfrequenten Messsignals (100) und des überlagerten Gleichspannungssignals (400) und/oder des niederfrequenten Wechselspannungssignals zur Erzeugung eines temperaturabhängigen Kompensationsmesssignals (500), insbesondere eines temperaturabhängigen Gleichspannungsmesssignals, angeordnet sein kann.

5. Schaltungsanordnung nach Anspruch 4, **dadurch gekennzeichnet, dass** ein Bauteil (13) zur Bildung eines Differenzsignals (600) des temperaturabhängigen Kompensationsmesssignals (500) und des korrigierten temperaturabhängigen Kompensationssignals (300) angeordnet ist, wobei Bauelemente (15, 16) zur Korrektur des Differenzsignals (600) und zur Korrektur des temperaturabhängigen Kompensationssignals (300), insbesondere zur Multiplikation des Differenzsignals und/oder des temperaturabhängigen Kompensationssignals (300) mit Korrekturfaktoren (K2, K3), angeordnet sein können.

6. Schaltungsanordnung nach Anspruch 4 oder 5, **dadurch gekennzeichnet, dass** ein Bauelement (14) zur Demodulation des hochfrequenten Messsignals (100) angeordnet ist, um ein von der physikalischen Größe abhängiges Gleichspannungsmesssignal (700) zu erzeugen.

7. Schaltungsanordnung nach Anspruch 5 oder 6, **dadurch gekennzeichnet, dass** ein Bauelement (17) zur Bildung eines Summensignals (800) des der physikalischen Größe abhängigen Gleichspannungsmesssignals (700) und/oder des korrigierten Differenzsignals (600) und/oder des korrigierten temperaturabhängigen Kompensationssignals (300) angeordnet ist, wobei eine Linearisierungsschaltung (-18) zur Linearisierung des Summensignals (800) angeordnet ist.

8. Schaltungsanordnung nach einem der Ansprüche 5 bis 7, **dadurch gekennzeichnet, dass** Bauelemente (19, 20) zur Korrektur des Differenzsignals (600) und zur Korrektur des temperaturabhängigen Kompensationssignals (300), insbesondere zur Multiplikation des Differenzsignals (600) und/oder des Kompensationssignals (300) mit Korrekturfaktoren (K4, K5), angeordnet sind und/oder dass ein Bauelement (21) zur Bildung eines weiteren Summensignals (1000) des ünearisierten Summensignals (900) und/oder des korrigierten Differenzsignals (600) und/oder des korrigierten temperaturabhängigen Kompensationssignals (300) angeordnet ist.

9. Schaltungsanordnung nach einem der Ansprüche 1 bis 8, **dadurch gekennzeichnet, dass** eine Ergänzungskapazität (22) zur Abstimmung der Resonanzfrequenz des durch die Messspule und/oder die Kapazität und/oder der Induktivität des Verbindungskabels (4) und/oder die Ergänzungskapazität (22) gebildeten Schwingkreises angeordnet ist.

10. Schaltungsanordnung nach einem der Ansprüche 1 bis 9, **dadurch gekennzeichnet, dass** ein Temperatursensor (23) in der unmittelbaren Nähe der Messspule zur Erfassung der Temperatur des Sensors (2) angeordnet ist, wobei der Temperatursensor (23) mit der Messspule thermisch gekoppelt sein kann, wobei ein Generator (24) zur Erzeugung eines Temperatursensorsignals (1100) angeordnet ist und wobei eine vorzugsweise analoge Schaltung (25) zur Aufbereitung und Erzeugung eines temperaturabhängigen Temperatursensormesssignals (1200) angeordnet sein kann.

## Claims

1. Circuit arrangement (1) for temperature compensation, with a sensor operating by the eddy current principle for measuring physical quantities, and with an evaluation unit (3) for evaluating the measuring signal (100) of the sensor (2), with the sensor (2) and the evaluation unit (3) being interconnected via a connection cable (4), and with an additional line - compensation line (5) - serving to compensate for the temperature of the connection cable (4), **characterised in that** the connection cable (4) is realized as a coaxial cable, and **in that** the compensation line (5) is connected at one end to the shield of the coaxial cable, the coaxial cable serving as a return line of the compensation line (5) to the evaluation unit (3), or the compensation line (5) having a separate return line.

2. Circuit arrangement according to claim 1, **characterised in that** the compensation line (5) is an integral component of the connection cable (4) or is arranged parallel to the connection cable (4), it being possible for the compensation line (5) to be shielded with respect to the connection cable (4).

3. Circuit arrangement according to claim 1 or 2, **characterised in that** the compensation line (5) is adapted for being supplied from a signal source (6), whereby a temperature-dependent compensation line signal (200), in particular a temperature-dependent dc voltage signal, may be generated, or **in that** the compensation line (5) is adapted for being supplied from a signal source (6) with low-frequency alternating current, whereby a temperature-dependent compensation line signal (200) may be generated, wherein a preferably analogue circuit (7) may be arranged for preparing the temperature-dependent compensation line signal (200), in particular the temperature-dependent dc voltage signal and/or the low-frequency ac voltage signal, and/or for generating a compensation signal (300), and wherein, for further processing of the compensation signal (300) generated by the circuit (7), components (8) may be arranged for correcting the temperature-dependent compensation signal (300), in particular for multiplying the temperature-dependent compensation signal (300) by at least one correction factor (K1).

4. Circuit arrangement according to any one of claims 1 to 3, **characterised in that** a generator (9) is arranged for generating a signal, in particular a high-frequency ac signal (100), with which the measuring coil can be supplied, in order to generate a measuring signal, in particular a high-frequency ac voltage measuring signal (100), and/or **in that** a further generator (10) is arranged for generating a dc signal (400) and/or a low-frequency ac signal with which the measuring coil can be supplied, wherein a preferably analogue circuit (12) may be arranged for separating and processing the high-frequency measuring signal (100) and the superposed dc voltage signal (400) and/or the low-frequency ac voltage signal for generating a temperature-dependent compensation measuring signal (500), in particular a temperature-dependent dc voltage measuring signal.

5. Circuit arrangement according to claim 4, **characterised in that** a component (13) is arranged for forming a difference signal (600) of the temperature-dependent compensation measuring signal (500) and the corrected temperature-dependent compensation signal (300), wherein components (15, 16) may be arranged for correcting the difference signal (600) and for correcting the temperature-dependent compensation signal (300), in particular for multiplying the difference signal and/or the temperature-dependent compensation signal (300) by correction factors (K2, K3).

6. Circuit arrangement according to claim 4 or 5, **characterised in that** a component (14) is arranged for demodulating the high-frequency measuring signal (100) in order to generate a dc voltage measuring signal (700) that is dependent on the physical quantity.

7. Circuit arrangement according to claim 5 or 6, **characterised in that** a component (17) is arranged for forming a composite signal (800) of the dc voltage measuring signal (700) that is dependent on the physical quantity and/or of the corrected difference signal (600) and/or of the corrected temperature-dependent compensation signal (300), wherein a linearization circuit (18) is arranged for linearizing the composite signal (800).

8. Circuit arrangement according to any one of claims 5 to 7, **characterised in that** components (19, 20) are arranged for correcting the difference signal (600) and for correcting the temperature-dependent compensation signal (300), in particular for multiplying the difference signal (600) and/or the compensation signal (300) by correction factors (K4, K5), and/or **in that** a component (21) is arranged for forming a further composite signal (1000) of the linearized composite signal (900) and/or of the corrected difference signal (600) and/or of the corrected temperature-dependent compensation signal (300).

9. Circuit arrangement according to any one of claims 1 to 8, **characterised in that** a supplementary capacitor (22) is arranged for tuning the resonant frequency of the oscillatory circuit formed by the measuring coil and/or the capacitance and/or inductance of the connection cable (4) and/or the supplementary capacitor (22).

10. Circuit arrangement according to any one of claims 1 to 9, **characterised in that** a temperature sensor (23) is arranged in the immediate vicinity of the measuring coil for measuring the temperature of the sensor (2), wherein the temperature sensor (23) may be thermally coupled with the measuring coil, wherein a generator (24) is arranged for generating a temperature sensor signal (1100), and wherein a preferably analogue circuit (25) may be arranged for preparing and generating a temperature-dependent temperature sensor measuring signal (1200).

## Revendications

1. Disposition de circuit (1) pour la compensation de température avec un capteur travaillant selon le principe des courants de Foucault pour la mesure de grandeurs physiques et avec une unité d'évaluation (3) pour l'évaluation du signal de mesure (100) du capteur (2), le capteur (2) et l'unité d'évaluation (3) étant reliés l'un à l'autre par un câble de liaison (4) et une ligne supplémentaire - ligne de compensation (5) - servant pour la compensation de la température du câble de liaison (4),
**caractérisée par le fait que** le câble de liaison (4) est réalisé en tant que câble coaxial et que la ligne de compensation (5) est reliée à une extrémité avec le blindage du câble coaxial, le câble coaxial servant en tant que ligne de retour de la ligne de compensation (5) à l'unité d'évaluation (3) ou la ligne de compensation (5) présentant une ligne de retour séparée.

2. Disposition du circuit selon la revendication 1,
**caractérisée par le fait que** la ligne de compensation (5) est un composant intégral du câble de liaison (4) ou est disposée parallèle au câble de liaison (4), la ligne de compensation (5) pouvant être blindée par rapport au câble de liaison (4).

3. Disposition de circuit selon la revendication 1 ou 2,
**caractérisée par le fait que** la ligne de compensation (5) peut être alimentée par une source de signaux (6), grâce à quoi un signal de ligne de compensation (200) dépendant de la température, en particulier un signal de tension continue dépendant de la température, peut être engendré ou que la ligne de compensation (5) peut être alimentée par une source de signaux (6) à courant alternatif basse fréquence, grâce à quoi un signal de ligne de compensation (200) dépendant de la température peut être engendré, un circuit (7) de préférence analogique pouvant être disposé pour la préparation du signal de ligne de compensation (200) dépendant de la température, en particulier du signal de tension continue dépendant de la température et/ou du signal de tension alternative basse fréquence, et/ou pour engendrer un signal de compensation (300), et des composants (8) pouvant être disposés pour le traitement supplémentaire du signal de compensation (300) engendré par le circuit (7) pour la correction du signal de compensation (300) dépendant de la température, en particulier pour la multiplication du signal de compensation (300) dépendant de la température par au moins un facteur de correction (K1).

4. Disposition de circuit selon l'une des revendications 1 à 3,
**caractérisée par le fait qu'**un générateur (9) est disposé pour engendrer un signal, en particulier un signal de courant alternatif (100) haute fréquence par lequel la bobine de mesure peut être alimentée, est disposé pour engendrer un signal de mesure, en particulier un signal de mesure de tension alternative (100) haute fréquence et/ou qu'un autre générateur (10) est disposé pour engendrer un signal de courant continu (400) et/ou un signal de courant alternatif basse fréquence, un circuit (12) de préférence analogique pouvant être disposé pour la séparation et le traitement du signal de mesure (100) haute fréquence et du signal de tension continue (400) superposé et/ou du signal de tension alternative basse fréquence pour engendrer un signal de mesure de compensation (500) dépendant de la température, en particulier d'un signal de mesure de tension continue dépendant de la température.

5. Disposition de circuit selon la revendication 4,
**caractérisée par le fait qu'**un composant (13) est disposé pour la formation d'un signal différentiel (600) du signal de mesure de compensation (500) dépendant de la température et du signal de compensation (300) dépendant de la température corrigé, des composants (15, 16) pouvant être disposés pour la correction du signal de compensation (300) dépendant de la température, en particulier pour la multiplication du signal différentiel et/ou du signal de compensation (300) dépendant de la température par des facteurs de correction (K2, K3).

6. Disposition de circuit selon la revendication 4 ou 5,
**caractérisée par le fait qu'**un composant (14) est disposé pour la démodulation du signal de mesure (100) haute fréquence pour engendrer un signal de mesure de tension continue dépendant de la grandeur physique.

7. Disposition de circuit selon la revendication 5 ou 6,
**caractérisée par le fait qu'**un composant (17) est disposé pour la formation d'un signal de somme (800) du signal de mesure de tension continue (700) dépendant de la grandeur physique et/ou du signal différentiel (600) et/ou du signal de compensation (300) dépendant de la température corrigé, un circuit de linéarisation (18) étant disposé pour la linéarisation du signal de somme (800).

8. Disposition de circuit selon l'une des revendications 5 à 7,
**caractérisée par le fait que** des composants (19,20) sont disposés pour la correction du signal différentiel (600) et pour la correction du signal de compensation (300) dépendant de la température, en particulier pour la multiplication du signal différentiel (600) et/ou du signal de compensation (300) par des facteurs de correction (K4,K5) et/ou qu'un composant (21) est disposé pour la formation d'un autre signal de somme (1000) du signal de somme (900) linéarisé et/ou du signal différentiel (600) corrigé et/ou du signal de compensation (300) dépendant de la température corrigé.

9. Disposition de circuit selon l'une des revendications 1 à 8,
**caractérisée par le fait qu'**une capacité complémentaire (22) est disposée pour l'accord de la fréquence de résonance du circuit oscillant formé par la bobine de mesure et/ou la capacité et/ou l'inductivité du câble de liaison (4) et/ou la capacité complémentaire (22).

10. Disposition de circuit selon l'une des revendications 1 à 9,
**caractérisée par le fait qu'**un capteur de température (23) est disposé au voisinage immédiat de la bobine de mesure pour l'acquisition de la température du capteur (2), le capteur de température (23) pouvant être accouplé thermiquement avec la bobine de mesure, un générateur (24) étant disposé pour engendrer un signal de température de capteur (1100) et un circuit (25), de préférence analogique, étant disposé pour préparer et engendrer un signal de mesure de température de capteur (1200) dépendant de la température.
